(19) Europäisches Patentamt
European Patent Office
Office européen des brevets

(11) EP 2 981 350 B1

(12) FASCICULE DE BREVET EUROPEEN

(45) Date de publication et mention de la délivrance du brevet:
**24.10.2018 Bulletin 2018/43**

(21) Numéro de dépôt: **14715357.1**

(22) Date de dépôt: **11.03.2014**

(51) Int Cl.:
***B01J 8/28*** (2006.01) ***B01J 8/32*** (2006.01)
***B01J 8/38*** (2006.01) ***B01J 8/00*** (2006.01)
***F23C 1/02*** (2006.01) ***F23C 10/10*** (2006.01)
***F23C 6/04*** (2006.01)

(86) Numéro de dépôt international:
**PCT/FR2014/050546**

(87) Numéro de publication internationale:
**WO 2014/162075 (09.10.2014 Gazette 2014/41)**

(54) **PROCEDE ET DISPOSITIF DE COMBUSTION PAR BOUCLE CHIMIQUE DE CHARGES HYDROCARBONEES LIQUIDES**

VERFAHREN UND VORRICHTUNG ZUR VERBRENNUNG VON FLÜSSIGEN KOHLENWASSERSTOFFBESCHICKUNGEN IN EINEM CHEMISCHEN KREISLAUF

METHOD AND DEVICE FOR CHEMICAL LOOP COMBUSTION OF LIQUID HYDROCARBON FEEDSTOCKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2013 FR 1353064**

(43) Date de publication de la demande:
**10.02.2016 Bulletin 2016/06**

(73) Titulaires:
- **IFP Energies nouvelles**
  **92500 Rueil-Malmaison (FR)**
- **TOTAL RAFFINAGE CHIMIE**
  **92400 Courbevoie (FR)**

(72) Inventeurs:
- **YAZDANPANAH, Mahdi**
  **F-69008 Lyon (FR)**
- **SOZINHO, Tiago**
  **69320 Feyzin (FR)**
- **GAUTHIER, Thierry**
  **F-69530 Brignais (FR)**
- **GUILLOU, Florent**
  **F-69360 Ternay (FR)**

(74) Mandataire: **IFP Energies nouvelles**
**Rond-point de l'échangeur de Solaize**
**BP3**
**69230 Solaize (FR)**

(56) Documents cités:
**EP-A1- 2 305 366** **EP-A1- 2 623 182**
**WO-A1-2014/068205** **FR-A- 1 134 513**
**FR-A1- 2 936 301** **FR-A1- 2 960 940**
**FR-A1- 2 980 258** **US-A1- 2012 214 106**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 981 350 B1

## Description

### Domaine de l'invention

La présente invention concerne la combustion par oxydo-réduction en boucle chimique (CLC) de charges hydrocarbonées liquides, notamment une nouvelle technologie de mise en oeuvre de ce procédé.

### Contexte général

Procédé de Chemical Looping Combustion ou CLC : dans la suite du texte, on entend par procédé CLC (Chemical Looping Combustion) un procédé d'oxydo-réduction en boucle sur masse active. Il convient de noter que, de manière générale, les termes oxydation et réduction sont utilisés en relation avec l'état respectivement oxydé ou réduit de la masse active. Le réacteur d'oxydation est celui dans lequel la masse oxydo-réductrice est oxydée et le réacteur de réduction est le réacteur dans lequel la masse oxydo-réductrice est réduite.

Dans un contexte de demande énergétique mondiale croissante, la capture du dioxyde de carbone en vue de sa séquestration est devenue une nécessité incontournable afin de limiter l'émission de gaz à effet de serre préjudiciable à l'environnement. Le procédé CLC permet de produire de l'énergie à partir de combustibles hydrocarbonés tout en facilitant la capture du dioxyde de carbone émis lors de la combustion.

Le procédé CLC consiste à mettre en oeuvre des réactions d'oxydo-réduction d'une masse active, typiquement un oxyde métallique, pour décomposer la réaction de combustion en deux réactions successives. Une première réaction d'oxydation de la masse active, avec de l'air ou un gaz jouant le rôle de comburant, permet d'oxyder la masse active.

Une seconde réaction de réduction de la masse active ainsi oxydée à l'aide d'un gaz réducteur permet ensuite d'obtenir une masse active réutilisable ainsi qu'un mélange gazeux comprenant essentiellement du dioxyde de carbone et de l'eau, voire du gaz de synthèse contenant de l'hydrogène et du monoxyde de carbone. Cette technique permet donc d'isoler le dioxyde de carbone ou le gaz de synthèse dans un mélange gazeux pratiquement dépourvu d'oxygène et d'azote.

La combustion étant globalement exothermique, il est possible de produire de l'énergie à partir de ce procédé, sous la forme de vapeur ou d'électricité, en disposant des surfaces d'échange dans la boucle de circulation de la masse active ou sur les effluents gazeux en aval des réactions de combustion ou d'oxydation.

Le brevet US 5 447 024 décrit un procédé de combustion en boucle chimique comprenant un premier réacteur de réduction d'une masse active à l'aide d'un gaz réducteur et un second réacteur d'oxydation permettant de restaurer la masse active dans son état oxydé par une réaction d'oxydation avec de l'air humide. La technologie du lit fluidisé circulant est utilisée pour permettre le passage continu de la masse active de son état oxydé à son état réduit et de son état réduit à son état oxydé.

La masse active, passant alternativement de sa forme oxydée à sa forme réduite et inversement, décrit un cycle d'oxydo-réduction.

Ainsi, dans le réacteur de réduction, la masse active ($M_xO_y$) est tout d'abord réduite à l'état $M_xO_{y-2n-m/2}$, par l'intermédiaire d'un hydrocarbure $C_nH$, qui est corrélativement oxydé en $CO_2$ et $H_2O$, selon la réaction (1), ou éventuellement en mélange CO + $H_2$ selon les proportions utilisées.

$$C_nH_m + M_xO_y \rightarrow n\, CO_2 + m/2\, H_2O + M_xO_{y-2n-m/2} \qquad (1)$$

Dans le réacteur d'oxydation, la masse active est restaurée à son état oxydé ($M_xO_y$) au contact de l'air selon la réaction (2), avant de retourner vers le premier réacteur.

$$M_xO_{y-2n-m/2} + (n+m/4)\, O_2 \rightarrow M_xO_y \qquad (2)$$

Dans les équations (1) et (2) ci-dessus, M représente un métal.

L'efficacité du procédé de combustion en boucle chimique (CLC) en lit fluidisé circulant repose dans une large mesure sur les propriétés physico-chimiques de la masse active d'oxydo-réduction.

La réactivité du ou des couples oxydo-réducteurs mis en jeu ainsi que la capacité de transfert d'oxygène associée sont des paramètres qui influent sur le dimensionnement des réacteurs et sur les vitesses de circulation des particules.

La durée de vie des particules quant à elle dépend de la résistance mécanique des particules ainsi que de leur stabilité chimique.

Afin d'obtenir des particules utilisables pour ce procédé, les particules mises en jeu sont généralement composées d'un couple ou d'un ensemble de couples oxydo-réducteur choisi parmi CuO/Cu, $Cu_2O$/Cu, NiO/Ni, $Fe_2O_3$/$Fe_3O_4$, FeO/Fe, $Fe_3O_4$/FeO, $MnO_2$/$Mn_2O_3$, $Mn_2O_3$/$Mn_3O_4$, $Mn_3O_4$/MnO, MnO/Mn, $Co_3O_4$/CoO, CoO/Co, et d'un liant apportant la stabilité physico-chimique nécessaire. Des interactions avec des supports, tels que $Al_2O_3$, sont possibles.

Les charges liquides, en particulier les charges liquides dites "lourdes", c'est-à-dire ayant un rapport élevé de carbone sur hydrogène, produisent une quantité élevée de gaz à effet de serre. Ainsi, la combustion de ces combustibles est une application particulièrement intéressante pour le procédé CLC.

Alors que de nombreuses études avec des charges gaz (essentiellement du méthane) et des charges solides ont été menées et ont montré la faisabilité de la boucle chimique de combustion pour ce type de combustibles, peu de solutions satisfaisantes ont été proposées pour la combustion de charges liquides lourdes.

Le principe de la combustion en boucle chimique d'oxydo-réduction en lit fluidisé de charges liquides est connu, et est par exemple décrit dans le brevet FR 2.930.771. Par rapport aux procédés CLC de charges gazeuses ou solides, la combustion en boucle chimique de charges liquides présente les spécificités décrites ci-dessous.

La charge hydrocarbonée liquide est injectée dans le lit dense du réacteur de réduction, et est de préférence atomisée au sein du lit fluidisé pour former de fines gouttelettes. Une partie de la charge liquide est vaporisée au contact de la masse active oxydo-réductrice chaude, dans un milieu généralement à plus de 700°C, et l'autre partie se condense pour former un dépôt de coke à la surface de la masse oxydo-réductrice à cause du craquage thermique résultant de l'exposition du combustible liquide à de très hautes températures. Plus les charges sont lourdes et plus elles tendront à former des quantités de coke élevées. Ainsi, sur un gazole ou sur un distillat sous vide, la quantité de coke formée sera de l'ordre de 1 à 20% de la charge injectée. Sur un résidu atmosphérique ou sur un résidu sous vide, la quantité de coke formée varie de 10 à 80% en fonction de la nature de la charge injectée. Cette formation de coke dépend de la nature des charges (concentration en précurseurs de coke, déterminable par la mesure de la teneur en asphaltènes ou de la teneur en carbone conradson). Elle dépend également des conditions de mise en contact (température, rapport du débit d'hydrocarbure sur le débit de la masse active, diamètre de gouttelettes de la charge liquide, diamètre de particules....) qui gouvernent le transfert de chaleur entre les particules et les gouttelettes, et donc la compétition entre le phénomène physique de vaporisation et la dégradation chimique liée au craquage thermique des hydrocarbures. Après la mise en contact entre la charge liquide et la masse active oxydo-réductrice, deux types de réactions de combustion interviennent entre les hydrocarbures et la masse active oxydo-réductrice. Une première réaction consiste en l'oxydation du combustible liquide vaporisé au contact de la masse active oxydo-réductrice. Une deuxième réaction, plus lente que la première réaction, correspond à la gazéification du coke déposé sur les particules produisant du gaz de synthèse (CO + $H_2$), qui brûlera ensuite rapidement avec la masse active oxydo-réductrice.

Cette formation de coke sur la masse oxydo-réductrice constitue un problème majeur dans le domaine du CLC de charges hydrocarbonées liquides, notamment parce qu'elle provoque une diminution importante de la capacité de transfert de l'oxygène de la masse active oxydo-réductrice. Cela a pour effet de dégrader de manière générale les performances du procédé CLC, que ce soit en terme de captage de $CO_2$, de production d'énergie ou de production de gaz de synthèse selon les applications envisagées pour le CLC.

En outre, parce que la formation de coke contribue à ralentir les réactions de combustion, il est souhaitable, de manière générale, de minimiser la formation de coke lors de l'injection de la charge liquide afin d'avoir des réactions de combustion aussi rapides que possible.

Enfin, la formation de coke sur la masse oxydo-réductrice constitue une contrainte sur le temps de séjour de la masse active dans le réacteur de combustion, qui doit être suffisamment long pour que tout le coke des particules retournant dans la zone de combustion, après leur passage dans le réacteur d'oxydation, soit éliminé par le processus lent de gazéification.

Le brevet FR 2.936.301 propose, pour pallier aux différents problèmes liés à la formation de coke lors de la combustion de charges liquides, un agencement de zones réactionnelles adapté à la combustion de charges liquides par boucle chimique, permettant une injection contrôlée et optimale de liquide au contact des oxydes métalliques et un contrôle du temps de séjour des particules dans la zone de combustion. Ainsi, l'essentiel de la combustion du coke déposé sur les particules est réalisé dans le réacteur de combustion, ce qui permet de limiter la quantité de $CO_2$ libérée dans les effluents gazeux en sortie du réacteur d'oxydation et d'atteindre un taux de captage très élevé de $CO_2$ (défini comme le ratio entre le $CO_2$ émis dans les fumées de la zone combustion par réduction de l'oxyde métallique rapportées aux émissions totales de $CO_2$ du procédé). Cependant, les quantités d'oxydes mises en jeu doivent être importantes afin de permettre un temps de séjour important du coke déposé sur les particules et sa gazéification.

FR 1134513 A décrit un procédé de conversion catalytique d'hydrocarbures en présence de particules de catalyseur et de solides inertes de transfert de chaleur.

FR 2960940 A1 et FR 2980258 A1 décrivent un procédé de combustion en boucle chimique d'une charge hydrocarbonée solide.

US 2012/0214160 A1 décrit un procédé de combustion en boucle chimique d'une charge hydrocarbonée liquide.

## Description de l'invention

Objectifs et résumé de l'invention

La présente invention a pour objectif de pallier au moins en partie aux problèmes de mise en oeuvre de combustion en boucle chimique de charges liquides évoqués ci-dessus, et propose un procédé CLC pour la combustion de charges hydrocarbonées liquides selon la revendication 1, comprenant l'utilisation de particules à haute température distinctes des particules du transporteur d'oxygène, qui permet de volatiliser la charge liquide hydrocarbonée et de porter le coke ainsi formé, afin d'éviter la perte de capacité de transfert d'oxygène par cokage des particules du transporteur d'oxygène. Ces particules utilisées pour porter le coke peuvent notamment former une deuxième boucle de circulation de particules en lit fluidisé, la première étant celle des particules du transporteur d'oxygène circulant entre les réacteurs d'oxydation et de combustion, permettant alors le recyclage desdites particules dans le procédé.

L'invention permet ainsi d'améliorer les performances du procédé CLC, en terme de captage de $CO_2$ et/ou de production d'énergie. L'invention permet par exemple d'atteindre un taux de captage de $CO_2$ supérieur à 90%.

La présente invention permet également de minimiser la quantité de masse active oxydo-réductrice utilisée en tant que transporteur d'oxygène. Ainsi, il est par exemple possible, à performances égales, par exemple pour un taux de captage de $CO_2$ de 90%, de minimiser la taille des installations CLC, et donc les coûts d'investissement associés.

L'invention concerne, selon un premier aspect, un procédé de combustion d'une charge hydrocarbonée liquide par oxydo-réduction en boucle chimique réalisé en lit fluidisé dans lequel on vaporise partiellement la charge hydrocarbonée liquide au contact d'un solide chaud sous forme de particules pour former une charge liquide partiellement vaporisée et pour former du coke sur ledit solide, avant de mettre en contact la charge liquide partiellement vaporisée avec une masse active oxydo-réductrice sous forme de particules distincte du solide chaud pour réaliser la combustion de la charge liquide partiellement vaporisée dans lequel:

- on vaporise partiellement la charge liquide au contact des particules du solide chaud dans une première zone de réaction, les particules dudit solide étant des particules de groupe A selon la classification de Geldart ;
- on envoie les effluents issus de la première zone de réaction dans une deuxième zone de réaction dans laquelle on réalise une gazéification du coke des particules du solide et on réalise une combustion de la charge liquide partiellement vaporisée et du gaz issu de la gazéification du coke par une mise en contact avec les particules de la masse active oxydo-réductrice, lesdites particules de la masse active oxydo-réductrice étant des particules de groupe B selon la classification de Geldart ;
- on poursuit la combustion de la charge liquide partiellement vaporisée et/ou du gaz issu de la gazéification du coke issus de la deuxième zone de réaction dans une troisième zone de réaction ;
- on sépare au sein du mélange issu de la troisième zone de réaction la majorité des particules de la masse active oxydo-réductrice et un flux gazeux contenant la majorité des particules du solide dans une zone de séparation ;
- on réalise une réoxydation des particules de la masse active oxydo-réductrice issues de la zone de séparation dans une quatrième zone de réaction avant de renvoyer au moins une partie desdites particules de la masse active oxydo-réductrice dans la deuxième zone de réaction.

Avantageusement, on sépare au sein du flux gazeux contenant la majorité des particules du solide issu de la zone de séparation les particules du solide et le gaz avant de renvoyer lesdites particules du solide dans la première zone de réaction.

De manière préférée, la charge hydrocarbonée liquide est atomisée avec un gaz d'atomisation pour former des gouttelettes de liquide finement dispersées dans le gaz d'atomisation avant d'être mise en contact avec les particules du solide dans la première zone de réaction.

Le solide peut être choisi parmi les matériaux suivants: un catalyseur de craquage catalytique usé, du coke de pétrole, du sable, du calcaire.

De préférence, les particules du solide ont une distribution granulométrique et une densité inférieures à celles des particules de la masse active oxydo-réductrice. En particulier, les particules du solide ont une distribution granulométrique telle que plus de 90 % des particules ont une taille comprise entre 50 micromètres et 150 micromètres et une densité comprise entre 1000 $kg/m^3$ et 1500 $kg/m^3$, et les particules de la masse active oxydo-réductrice ont une distribution granulométrique telle que plus de 90 % des particules ont une taille comprise entre 100 micromètres et 500 micromètres et ont une densité comprise entre 2500 $kg/m^3$ et 4500 $kg/m^3$.

La proportion massique de coke déposée sur le solide dans la première zone de réaction est avantageusement comprise entre 1 % et 20 %.

De préférence, les particules du solide mises en contact avec la charge liquide dans la première zone de réaction ont une température comprise entre 600°C et 1000°C.

De préférence, la vitesse superficielle du gaz dans la première zone de réaction est comprise entre 1 m/s et

15 m/s, le temps de séjour moyen de l'ensemble des particules est compris entre 1 seconde et 20 secondes; la vitesse superficielle du gaz dans la deuxième zone de réaction est comprise entre 0,3 m/s et 3 m/s, et le temps de séjour moyen de l'ensemble des particules est compris entre 0,25 minutes et 20 minutes; et la vitesse superficielle du gaz dans la troisième zone de réaction est comprise entre 1 m/s et 30 m/s, le temps de séjour moyen du gaz est compris entre 1 seconde et 20 secondes, le temps de séjour moyen de l'ensemble des particules est compris entre 2 secondes et 1 minute.

L'invention concerne, selon un deuxième aspect, un dispositif de combustion en boucle chimique d'une charge hydrocarbonée liquide par oxydo-réduction en lit fluidisé selon la revendication 10 comprenant:

- une première zone de réaction pour la vaporisation partielle de la charge liquide hydrocarbonée et le dépôt de coke sur un solide chaud sous forme de particules comprenant:
  - des moyens d'injection de la charge liquide hydrocarbonée,
  - des moyens d'alimentation en ledit solide, et
  - des moyens d'injection d'un gaz de fluidisation;
- une deuxième zone de réaction pour la gazéification du coke des particules du solide et pour la combustion de la charge liquide partiellement vaporisée et du gaz issu de la gazéification du coke, située en aval de la première zone de réaction et comprenant des moyens d'alimentation en une masse active oxydo-réductrice sous forme de particules distincte du solide chaud,
- une troisième zone de réaction pour finaliser la combustion de la charge liquide partiellement vaporisée et/ou du gaz issu de la gazéification du coke ;
- une zone de séparation pour séparer au sein d'un mélange issu de la troisième zone de réaction la majorité des particules de la masse active oxydo-réductrice et un flux gazeux contenant la majorité des particules du solide, comprenant:
  - une conduite d'admission pour ledit mélange,
  - une conduite d'évacuation pour la majorité des particules de la masse active oxydo-réductrice, et
  - une conduite de sortie pour le flux gazeux contenant la majorité des particules du solide; et
- une quatrième zone de réaction pour la réoxydation des particules de la masse active oxydo-réductrice issues de la zone de séparation comprenant:
  - des moyens d'alimentation en particules de la masse active oxydo-réductrice issues de la zone de séparation,
  - des moyens d'injection d'un gaz d'oxydation, et
  - des moyens d'évacuation d'un flux gazeux comprenant la majorité des particules de la masse active oxydo-réductrice réoxydées.

Avantageusement, les moyens d'injection de la charge liquide hydrocarbonée de la première zone de réaction comprennent des moyens de mélange de la charge liquide avec un gaz d'atomisation et des moyens d'atomisation de la charge liquide.

Selon un mode de réalisation, le dispositif comprend en outre une zone de séparation gaz-solide pour séparer les particules du solide et le gaz au sein du flux gazeux contenant la majorité desdites particules issu de la zone de séparation et recycler lesdites particules dans la première zone de réaction.

Selon un autre mode de réalisation, les première, deuxième et troisième zones de réaction forment respectivement trois parties successives d'un seul et même réacteur, une première partie à la base du réacteur comprenant la première zone de réaction étant sensiblement allongée et verticale et débouchant dans une deuxième partie au centre du réacteur comprenant la deuxième zone de réaction, ladite deuxième partie se prolongeant par une troisième partie du réacteur comprenant la troisième zone de réaction sensiblement allongée et verticale, ladite deuxième partie du réacteur ayant une section plus grande que celle des première et troisième parties du réacteur.

Selon un autre mode de réalisation, chaque zone de réaction correspond à un réacteur indépendant, les réacteurs indépendants étant connectés par des conduites permettant le transport des effluents comprenant les particules.

D'autres objets et avantages de l'invention apparaîtront à la lecture de la description comportant des exemples de réalisations particuliers de l'invention, donnés à titre non limitatifs, la description étant faite en référence aux figures annexées décrites ci-après.

Brève description des figures

La figure 1 est un schéma de principe du procédé selon l'invention.
La figure 2 est un schéma du procédé selon un mode de réalisation de l'invention.

Sur les figures, les mêmes références désignent des éléments identiques ou analogues.

Description détaillée de l'invention

Le procédé selon l'invention permet la combustion d'une charge hydrocarbonée liquide par oxydo-réduction en boucle chimique. Une mise en oeuvre en lit fluidisé est réalisée dans la zone d'oxydation et dans la zone de réduction. Selon l'invention, on vaporise partiellement la charge hydrocarbonée liquide au contact d'un solide chaud sous forme de particules pour former une charge liquide partiellement vaporisée et pour former du coke sur ledit solide, avant de mettre en contact la charge liquide partiellement vaporisée avec une masse active oxydo-réductrice sous forme de particules pour réaliser la combustion de la charge liquide partiellement vaporisée. Le solide chaud, utilisé pour la vaporisation de la charge hydrocarbonée liquide avant que celle-ci soit mise en contact avec la masse oxydo-réductrice, joue ainsi le rôle de porteur de coke dans le procédé CLC, permettant de limiter le dépôt de coke sur les particules de la masse oxydo-réductrice, et par conséquent la perte de capacité de transfert d'oxygène de cette dernière qui impacte négativement les performances du procédé CLC. Le procédé CLC selon l'invention permet par exemple d'obtenir des taux de captage de $CO_2$ très élevés, supérieurs à 90%.

Le procédé comprend les étapes principales suivantes: vaporisation partielle de la charge hydrocarbonée liquide avec formation de coke au contact avec le solide porteur de coke, gazéification du coke, combustion des gaz issus des phénomènes de gazéification et de vaporisation au contact du transporteur d'oxygène, et réoxydation du transporteur d'oxygène, ces étapes étant réalisées dans quatre zones réactionnelles principales 3, 4, 5 et 7, en référence aux figures 1 et 2. Une étape de séparation des particules du solide de celles de la masse active oxydo-réductrice est également réalisée à l'issue de la combustion. Ces différentes étapes sont détaillées dans la suite de la description. Un tel procédé est illustré par les figures 1 et 2.

La figure 1 illustre le principe du procédé CLC selon l'invention. Sur le schéma de la figure 1, un mode de réalisation du procédé CLC et du dispositif selon l'invention dans lequel chacune des zones réactionnelles 3, 4, 5 correspond à un réacteur indépendant est représenté, les réacteurs indépendants étant connectés par des conduites permettant le transport des effluents comprenant les particules.

Dans une première zone de réaction 3 ou réacteur de vaporisation, on injecte une charge hydrocarbonée liquide 2 par des moyens d'injection et on introduit un solide chaud 1 se présentant sous forme de particules par des moyens d'alimentation. La mise en contact de la charge liquide 2 et des particules du solide chaud 1 produit une vaporisation d'une partie du combustible liquide, tandis que la partie restante est déposée sur les particules du solide 1 sous la forme de coke. Le coke correspond donc ici au résidu solide carboné résultant de la vaporisation à haute température, typiquement à une température supérieure à 400°C, qui est la température d'équilibre du milieu après contact entre les gouttelettes et les particules, une fois la vaporisation effectuée. De préférence, la température des particules du solide 1 introduites dans la première zone de réaction 3 est comprise entre 600°C et 1000°C. La charge hydrocarbonée liquide est introduite à une température pouvant permettre une bonne atomisation, généralement comprise entre 100°C et 350°C en fonction de sa viscosité.

Les particules de solide 1, en plus de permettre la vaporisation partielle de la charge liquide 2 et le craquage thermique d'une partie de cette charge, ce qui contribue à améliorer nettement la cinétique de combustion, jouent également le rôle de porteur de coke dans le procédé CLC. En déposant ainsi le coke formé lors de la vaporisation partielle de la charge liquide sur les particules du solide 1, on limite la formation de coke sur la masse active oxydo-réductrice utilisée pour la combustion de la charge liquide, et par conséquent on réduit la perte de capacité de transfert d'oxygène de la masse active oxydo-réductrice liée au recouvrement de la surface des particules de la masse oxydo-réductrice par du coke. On augmente ainsi les performances du procédé, tel que taux de captage de $CO_2$ et/ou la production d'énergie.

Les particules de solide 1 sont des particules de type A selon la classification de Geldart relative à l'aptitude des particules à la fluidisation, soit des particules fines à fluidisation relativement facile (Geldart D., Powder Technology, 7, p285-292 (1973)). Des exemples de solide 1 sont donnés plus bas dans la description. Les propriétés physiques des particules du solide 1 sont telles quelle peuvent être facilement fluidisées, et aptes à être séparées des particules de la masse active oxydo-réductrice. De préférence, les particules du solide 1 ont une distribution granulométrique telle que plus de 90 % des particules ont une taille (diamètre moyen de Sauter) comprise entre 50 micromètres et 150 micromètres et une densité comprise entre 1000 kg/$m^3$ et 1500 kg/$m^3$.

En référence à la caractérisation des matériaux sous forme de particules utilisés dans la présente invention, on entend par densité du matériau sous forme de particules la densité de grain qui prend en compte la porosité.

La charge liquide 2 est préférentiellement atomisée avant sa mise en contact avec les particules du solide chaud 1, avec un gaz d'atomisation, de préférence de la vapeur d'eau, pour former des gouttelettes de liquide finement dispersées dans le gaz d'atomisation. La taille des gouttelettes de liquide est de préférence proche de la taille des particules du solide 1, afin d'optimiser le contact solide-liquide. Cette atomisation permet le contrôle des conditions de vaporisation de la charge liquide 2 de manière à minimiser la formation de coke.

Les moyens d'injections de la charge liquide 2 compris par la première zone de réaction 3 peuvent ainsi comprendre des moyens de mélange de la charge liquide 2 avec le gaz d'atomisation et des moyens d'atomisation de la charge liquide 2 (non représentés sur la figure 1). Ces moyens sont par exemple décrits dans le brevet FR2.936.301.

Les moyens d'atomisation permettant de former des gouttelettes de petite taille sur des débits importants de liquide en présence de gaz sont bien connus de l'homme du métier. On peut par exemple utiliser des injecteurs de type venturi, où l'atomisation du liquide s'effectue en présence de gaz par passage dans une restriction, puis la suspension s'écoule dans un divergent avant d'être mise en forme dans un embout. On peut également utiliser un injecteur de type impact, dans lequel on trouve une cible sur laquelle le liquide arrive à haute vitesse et est cisaillé par un courant gazeux avant d'être transporté vers un embout de mise en forme du jet. On peut également envisager des systèmes plus complexes déjà bien décrits dans la littérature. Ces injecteurs permettent de former sur des débits unitaires importants (jusqu'à 30-60$m^3$/h de liquide) des gouttelettes dont la taille est voisine de 100 microns ou moins avec des débits de gaz variant de 3 % à 8 % poids du liquide tout en limitant la dissipation d'énergie à des pertes de charges inférieures à 10-15 bar.

Les gouttelettes sont préférentiellement injectées à la périphérie de la première zone de réaction 3 dans laquelle les particules du solide 1 sont transportées, grâce à un nombre important de moyens d'atomisation disposés autour de ladite zone et formant un jet dirigé vers le centre de la zone.

Le jet de gouttelettes formé par chaque atomiseur est constitué des gouttelettes en suspension dans un gaz (préférentiellement de la vapeur d'eau, ou un mélange vapeur d'eau-CO2, ou les fumées recyclées) ayant au moins en partie servi à atomiser les gouttelettes.

Le ratio massique du gaz injecté avec les gouttelettes est avantageusement compris entre 1 et 15 % poids, préférentiellement de 3 % à 8 %.

Les gouttelettes et le gaz injecté avec les gouttelettes forment un jet qui débouche généralement dans la première zone de réaction 3 à une vitesse superficielle moyenne comprise entre 10 m/s et 150 m/s, préférentiellement comprise entre 30 et 100 m/s. On entend par vitesse superficielle le rapport entre le débit volumique de gaz aux conditions passant dans la section ($m^3$/s) du réacteur et la section du réacteur ($m^2$). Il est important d'injecter la suspension gaz-gouttelettes dans la première zone de réaction 3 à une vitesse élevée afin de pénétrer l'écoulement de particules.

De préférence, la vitesse superficielle du gaz dans la première zone réactionnelle 3 est comprise entre 1 m/s et 15 m/s.

Le taux de vide avant vaporisation est préférentiellement compris entre 0,5 et 0,9 (50 % - 90 %). Après vaporisation de la charge hydrocarbonée liquide, le taux de vide augmente et est de préférence généralement compris, en moyenne, entre 0,8 et 0,98.

Le temps de séjour moyen de l'ensemble des particules est de préférence compris entre 1 seconde et 20 secondes.

La première zone réactionnelle 3 correspond à une zone de transport dans laquelle le renouvellement des particules de solide chaud 1 mises en contact avec la charge liquide 2 injectée, de préférence sous forme de gouttelettes, est assuré par un mouvement de circulation contrôlé de façon à s'assurer que le liquide injecté est toujours au contact avec un solide chaud qui est introduit dans la zone de réaction 3 et qui va vers la deuxième zone réactionnelle 4. En effet, au contact du liquide, le solide 1 se refroidit. Le mouvement de circulation dans la première zone réactionnelle 3 peut est assuré par le bilan pression aux bornes de la zone réactionnelle, par exemple par le bilan pression de la boucle de circulation du solide 1 lorsque le solide est recyclé.

La première zone de réaction 3 comprend des moyens d'injection d'un gaz de fluidisation pour fluidiser les particules du solide 1 (non représenté sur la figure 1), situés en amont de l'injection de la charge d'hydrocarbures. Le gaz de fluidisation est de préférence de la vapeur d'eau, du $CO_2$, ou un mélange des deux, afin de favoriser la gazéification du coke, notamment à l'étape suivante. Les moyens de fluidisation (non représentés) sont bien connus de l'homme du métier et sont par exemple, des grilles de distribution plates ou tronconiques, des couronnes de distribution ou des "spargers".

Il faut souligner que l'injection de gouttelettes dans un lit fluidisé dense, dans lequel la vitesse de fluidisation des particules est inférieure à la vitesse de transport des particules et dans lequel la circulation de solides dépend intrinsèquement de la qualité de fluidisation et de la géométrie du réacteur n'est, en ce sens, pas satisfaisante. Il est donc préférable d'injecter les gouttelettes de liquide dans un conduit dans lequel les particules de solide chaud 1 sont transportées, le renouvellement de ces particules au contact des gouttelettes dépendant alors uniquement du bilan

pression aux bornes de la ligne de transport, qui peut être ajusté lors du dimensionnement de l'installation, ou pendant l'opération en ajustant la différence de pression entre les éléments de la boucle de circulation. A cet effet, dans le procédé selon l'invention, la première zone réactionnelle 3 est de préférence sensiblement allongée et verticale. Les conditions opératoires aux bornes de cette zone de transport (débits, pression...) sont choisies afin que la vitesse superficielle du gaz après vaporisation de la charge liquide 2 soit supérieure à la vitesse de transport des particules du solide 1.

Le rapport massique entre le débit des particules du solide 1 et le débit de liquide 2 est compris typiquement entre 1 et 100, préférentiellement compris entre 1 et 30, pour apporter suffisamment d'énergie aux gouttelettes par contact avec les particules d'une part, pour maximiser l'aire interfaciale des particules du solide 1 qui conditionnera les échanges thermiques et le dépôt de coke sur chaque particule d'autre part, et pour assurer ensuite par la vaporisation et réaction d'une fraction de la charge liquide 2 le transport des particules du solide 1 grâce au transfert de quantité de mouvement de la phase gazeuse (constituée des gaz provenant de la charge liquide et des gaz auxiliaires destinés à fluidiser le solide porteur de coke et à atomiser la charge liquide) vers les particules du solide 1.

En sortie de cette première zone réactionnelle 3, le pourcentage massique de coke déposée sur le solide 1 portant le coke est avantageusement compris entre 1 % et 20 %, de préférence entre 3 % et 10 %, encore plus préférentiellement entre 5 % et 10%. Ce pourcentage correspond à la fraction de matière issue de l'hydrocarbure qui se dépose sur les particules suite à la non vaporisation d'une partie de celui ci. Si M est la masse d'une particule avant contact avec la charge, sa masse devient M' après l'injection de charge et le pourcentage de coke déposé correspond à (M'-M)/M*100.

On envoie dans une deuxième zone de réaction 4 ou réacteur de gazéification-combustion 4 les effluents issus de la première zone de réaction 3, à savoir un mélange comprenant les particules de solide 1 cokées, la charge liquide partiellement vaporisée 19 et des gaz auxiliaires de fluidisation et éventuellement d'atomisation, et on met en contact ces effluents avec une masse oxydo-réductrice sous forme de particules 12. La deuxième zone de réaction 4 comprend des moyens d'alimentation en particules de la masse oxydo-réductrice 12 en provenance d'une quatrième zone de réaction 7 ou réacteur d'oxydation dans laquelle la masse oxydo-réductrice est oxydée.

La deuxième zone de réaction 4 peut également comprendre des moyens d'injection d'un gaz de fluidisation (non représentés), afin de faciliter le mélange de l'effluent provenant de la première zone réactionnelle 3 et entrant dans la deuxième zone de réaction 4 avec les particules d'oxydes métalliques 12.

La masse active oxydo-réductrice joue le rôle de transporteur d'oxygène entre les zones réactionnelles (4, 5) de réduction de la charge liquide partiellement vaporisée 19 et le réacteur d'oxydation 7. La masse oxydo-réductrice peut être composée d'oxydes métalliques, tels que par exemple des oxydes de Fe, Ti, Ni, Cu, Mn, Co, V, seuls ou en mélange, pouvant provenir de minerais (par exemple l'ilménite ou la pyrolusite) ou être synthétiques (par exemple des particules d'oxyde de nickel supportées sur alumine NiO/NiAl2O4), avec ou sans liant, et présente les propriétés d'oxydo-réduction requises et les caractéristiques nécessaires à la mise en oeuvre de la fluidisation.

La masse oxydo-réductrice est mise sous forme de particules dont la granulométrie est choisie de manière à faciliter le transport et l'écoulement des particules dans et entre les diverses zones réactionnelles. Les particules de la masse oxydo-réductrice sont des particules de type B selon la classification de Geldart. Les particules de solide 1 étant de type A selon cette même classification, il est possible d'envisager une phase de séparation des deux types de particules pour recycler au moins les particules du transporteur d'oxygène, et de préférence pour recycler les deux types de particules: celles du transporteur d'oxygène qui reviennent dans la zone réactionnelle 4 après séparation et oxydation dans le réacteur 7, et les particules du solide 1 qui peuvent retourner dans la zone réactionnelle 3 après séparation.

Pour ces mêmes raisons, les particules de la masse active oxydo-réductrice ont de préférence une distribution granulométrique et une densité supérieures à celles des particules du solide 1. Avantageusement, les particules de la masse active oxydo-réductrice ont une distribution granulométrique telle que plus de 90 % des particules ont une taille comprise entre 100 micromètres et 500 micromètres et ont une densité de grain comprise entre 2500 kg/$m^3$ et 4500 kg/$m^3$.

La capacité de stockage en oxygène de la masse oxydo-réductrice est avantageusement comprise, suivant le type de matériau, entre 1 % et 15 % poids. Avantageusement, la quantité d'oxygène effectivement transférée par l'oxyde métallique est comprise entre 1 et 2 % poids, ce qui permet de n'utiliser qu'une fraction de la capacité de transfert d'oxygène, idéalement moins de 30 % de celle ci afin de limiter les risques de vieillissement mécanique ou d'agglomération des particules.

La masse oxydo-réductrice est dite active en rapport avec ses capacités réactives, dans le sens où elle est apte à jouer son rôle de transporteur d'oxygène dans le procédé CLC en captant et relarguant de l'oxygène. La masse active oxydo-réductrice peut subir une phase d'activation de manière à augmenter ses capacités réactives pouvant consister en une phase de montée en température, de préférence progressive, et de préférence sous atmosphère oxydante (par exemple sous air). Cette phase d'activation peut par exemple être réalisée dans l'installation, en particulier en introduisant les particules de la masse oxydo-réductrice au moment du démarrage du procédé, avant que soient initiés les cycles d'oxydo-réduction avec l'introduction de combustible dans le procédé.

Dans la deuxième zone de réaction 4, deux types de réactions sont effectuées:

- La réaction (3) ci-dessous correspond à la réaction de gazéification du carbone déposé sur les particules du solide 1 porteur de coke, qui produit du gaz de synthèse ($CO+H_2$).

$$C + H_2O \rightarrow CO + H_2 \qquad (3)$$

- L'ensemble des réactions (4), (5), et (6) ci-dessous traduit l'oxydation de la charge hydrocarbonée liquide partiellement vaporisée 19 et du gaz de synthèse au contact des oxydes métalliques :

$$C_nH_m + M_xO_y \text{ -> } nCO_2 + m/_2\ H_2O + M_xO_{y-2n-m/2} \qquad (4)$$

$$CO + M_xO_y \text{ -> } CO_2 + M_xO_{y-1} \qquad (5)$$

$$H_2 + M_xO_y \text{ -> } H_2O + M_xO_{y-1} \qquad (6)$$

Les conditions de fluidisation sont telles que cette deuxième zone de réaction 4 opère de préférence en lit fluidisé dense. Par lit fluidisé dense, on entend un lit fluidisé dans lequel la fraction de gaz $\varepsilon g$ est inférieure à 0,9, de préférence inférieure à 0,8. Dans cette deuxième zone 4, la vitesse du gaz est de préférence faible afin d'obtenir une phase dense, et le temps de séjour des particules est de préférence élevé.
Avantageusement, la vitesse superficielle du gaz est comprise entre 0,3 m/s et 3 m/s, et le temps de séjour moyen de l'ensemble des particules est compris entre 0,25 minutes et 20 minutes.
En moyenne, dans la deuxième zone réactionnelle 4, le taux de vide peut être compris entre 0,5 et 0,9, de préférence entre 0,7 et 0,9.
La température dans la deuxième zone de réaction 4 est sensiblement homogène, et est de préférence supérieure à 800°C, et préférentiellement comprise entre 900°C et 1000°C de façon à minimiser la durée requise pour gazéifier le coke.
Dans une troisième zone de réaction 5 ou réacteur de combustion, on poursuit la combustion afin de compléter l'oxydation de la fraction de combustible non brulé (charge liquide partiellement vaporisée 19 et/ou gaz de synthèse) dans le réacteur de gazéification-combustion 4 pour former majoritairement du $CO_2$ et de la vapeur d'eau. L'oxygène requis pour cette oxydation, réalisée selon les équations réactionnelles (3), (4) et (5), est fourni par la masse active oxydo-réductrice.
De préférence, le temps de séjour moyen du gaz dans cette troisième zone de réaction 5 est compris entre 1 seconde et 20 secondes, le temps de séjour moyen de l'ensemble des particules est compris entre 2 secondes et 1 minute, et le taux de vide est supérieur à 0,9.
La vitesse superficielle du gaz est de préférence supérieure à 1 m/s et inférieure à 30 m/s, de préférence comprise entre 1 et 15 m/s, plus préférentiellement entre 3 et 15 m/s, de façon à faciliter le transport de l'ensemble des particules tout en minimisant les pertes de charge de façon à optimiser le rendement énergétique du procédé.
Cette zone réactionnelle 5 opère de préférence en lit fluidisé dilué. Par lit fluidisé dilué, on entend un lit fluidisé dans lequel la fraction volumique des particules (solide + masse actives oxydo-réductrice) est inférieure à 10% en volume.
A l'issue de cette étape, le mélange en sortie de la zone réactionnelle 5 comprend les particules de la masse active oxydo-réductrice partiellement réduites, les particules du solide 1 majoritairement régénérées, c'est-à-dire ne portant plus de coke, et les gaz issus de la combustion, en majorité du $CO_2$ et de la vapeur d'eau.
L'oxygène fourni par la masse active oxydo-réductrice dans les zones réactionnelles 4 et 5 est préférentiellement inférieur à 2 % massique par rapport à la masse d'oxyde métallique.
La température dans la troisième zone de réaction 5 est de préférence supérieure à 800 °C, et plus préférentiellement comprise entre 900°C et 1000°C.
A l'issue de la combustion dans la troisième zone de réaction 5, le mélange gaz/particules est envoyé dans une zone de séparation 6 afin de séparer au sein dudit mélange les particules lourdes des particules légères. Les particules lourdes sont essentiellement constituées par les particules de la masse active oxydo-réductrice à recycler, et les particules légères par les particules de solide 1, que l'on cherche de préférence à recycler vers la première zone de réaction 3, notamment car elles peuvent contenir du coke imbrulé.
Cette étape de séparation permet d'envoyer au moins une partie des particules de la masse active oxydo-réductrice vers la zone d'oxydation 7, qui sera ensuite à nouveau envoyée, au moins en partie, vers la zone de gazéification-combustion 4, formant ainsi une première boucle de circulation. Les particules du solide 1 qui sortent de la zone de séparation 6 peuvent avantageusement être renvoyées dans la première zone réactionnelle 3 (réacteur de vaporisation) pour leur recyclage, formant ainsi une deuxième boucle de circulation dans le procédé selon l'invention.
Un tel séparateur de particules est par exemple décrit en détails dans la demande de brevet européen EP 2.577.162, et ses principales caractéristiques sont reprises ci-dessous.

La zone de séparation 6 comprend une conduite d'admission pour ledit mélange, une conduite d'évacuation pour les particules de la masse active oxydo-réductrice, et une conduite de sortie pour le flux gazeux contenant la majorité des particules du solide 1.

La zone de séparation 6 peut également comprendre un conduit (non représenté) pour l'introduction d'un gaz provenant d'une source extérieure. Ce gaz peut contenir de l'oxygène ou un gaz oxydant pour poursuivre les réactions de combustion du CO et de l'hydrogène dans le séparateur 6.

Au sein de la zone de séparation 6, la vitesse superficielle de l'écoulement gazeux est supérieure à la vitesse terminale de chute des particules du solide 1 pour permettre leur entraînement avec le gaz.

Ainsi, en soumettant le mélange gaz/particules issu de la troisième zone de réaction 5 à un écoulement gazeux de vitesse imposée, il est possible de procéder à une séparation "rapide" entre les particules lourdes et les particules légères.

Par séparation rapide, on entend une séparation s'opérant en moins de 1 minute et préférentiellement en moins de 20 secondes, cette durée correspondant au temps de séjour des particules légères dans la phase diluée du séparateur.

La phase diluée présente généralement un taux de particules généralement inférieur à 5%, voire inférieur à 1% (vol.).

La zone de séparation 6 comprend au moins une enceinte comprenant la conduite d'admission dudit mélange, et dans laquelle la conduite d'évacuation pour la majorité des particules de la masse active oxydo-réductrice 12 est située en partie inférieure de l'enceinte et la conduite de sortie pour le flux gazeux contenant la majorité des particules du solide 1 est située en partie supérieure du dispositif. Les paramètres d'admission et d'évacuation/sortie sont choisis pour créer dans l'enceinte une phase dense en partie inférieure et une phase diluée en partie supérieure, et la conduite d'admission débouche dans la phase diluée.

Ainsi, la séparation est réalisée dans la phase diluée du séparateur de façon à obtenir la meilleure efficacité de séparation possible.

On peut définir l'efficacité de séparation par la formule:

X= quantité de particules de solide 1 entraînées avec le gaz / quantité totale de particules de solide 1 dans le mélange de particules entrant dans le séparateur 6.

Grâce à la mise en oeuvre d'un tel dispositif de séparation, une efficacité de séparation généralement supérieure à 70%, voire supérieure à 80%, peut être obtenue. De par cette bonne efficacité de séparation, il est possible d'augmenter le taux de captage en $CO_2$ du procédé, celui-ci étant défini par le ratio quantité de $CO_2$ émis au niveau de la zone de combustion /quantité totale de $CO_2$ émis dans la boucle CLC.

Ainsi, l'utilisation d'un tel dispositif de séparation, rendue possible par l'utilisation des deux types de particules conformément à l'invention, contribue à atteindre un taux de captage supérieur à 90 %.

De manière préférée, l'écoulement gazeux à vitesse imposée est induit entièrement par l'effluent gazeux contenant les particules provenant de la troisième zone de réaction 5, mais il est également possible d'ajuster la vitesse par injection complémentaire d'un gaz provenant d'une source externe, qui peut également contribuer à la fluidisation d'une phase dense accumulant les particules sédimentées.

De préférence, la vitesse superficielle du gaz dans la phase diluée de la zone de séparation est fixée à une valeur généralement comprise entre 30 et 300% de la vitesse terminale de chute moyenne des particules de la masse active oxydo-réductrice, de préférence comprise entre 50 % et 150 %, et encore de préférence comprise entre 75 % et 125 %.

La vitesse terminale de chute moyenne est obtenue à partir de la formule (7) suivante (extraite de Fluidization Engineering, Butterworth-Heinemann, Daizo Kunii, Octave Levenspiel, p.80) :

$$\mathrm{Vt} = \left( \frac{4 d_p (\rho_s - \rho_g) g}{3 \rho_g C_D} \right)^{\frac{1}{2}} \qquad (7)$$

où:

$d_p$ est le diamètre moyen des particules

$\rho_s$ est la masse volumique des particules (kg/m$^3$)

$\rho_g$ est la masse volumique du gaz (kg/m$^3$)

$C_D$ le coefficient de traînée

A la sortie de la zone de séparation 6, le flux gazeux contenant les particules les plus légères est envoyé vers un ou plusieurs cyclones de séparation gaz-solide 8. En sortie du ou des cyclones, le flux gazeux 11 ne contient plus qu'une teneur en particules généralement comprise entre 100 $mg/m^3$ et 1 $g/m^3$. Des traitements ultérieurs sont envisageables, tels que le dépoussiérage ultime, la condensation de l'eau, la récupération de chaleur, la deSOx, la deNOx, etc.

La liaison entre la troisième zone de réaction 5 et la zone de séparation 6 peut être constituée d'un cône divergent, ouvert vers le sommet de la zone de séparation 6, selon un angle compris avantageusement entre 6° et 30°. Dans ce cas, la vitesse minimale du gaz en sortie du cône est supérieure à 3 m/s et de préférence supérieure à 5 m/s, de façon à atteindre des conditions de transport satisfaisantes en sortie de la troisième zone de réaction 5. De manière analogue, ce cône divergent peut être constitué par un insert placé en tête de la troisième zone de réaction 5. De cette façon, une bonne répartition du mélange gazeux contenant des particules est assurée sur toute la section transversale de la zone de séparation 6. Ainsi, la hauteur totale de la zone de séparation 6 peut être limitée.

En ce qui concerne les particules de la masse active oxydo-réductrice 12 soutirées directement dans la partie inférieure de la zone de séparation 6, celles-ci sont envoyées par une conduite 13 vers la quatrième zone de réaction d'oxydation 7, composée d'un ou plusieurs lits fluidisés en parallèle ou en série alimentée en un gaz oxydant 9 tel que l'air ou la vapeur d'eau.

La conduite 13 peut alimenter une enceinte (non représentée) faisant office de zone tampon. Cette zone tampon peut être matérialisée par un lit fluidisé concentrique et périphérique à la troisième zone de réaction 5, la fluidisation étant obtenue par injection d'un gaz amené par une conduite (non représentée). De manière avantageuse, ce gaz participe à la séparation dans la zone de séparation 6 en étant canalisé vers ladite zone de séparation par une autre conduite (non représentée). Dans ce lit fluidisé de la zone tampon, il est avantageux de disposer de moyens d'échange de chaleur qui peuvent être des tubes en paroi ou dans le lit fluidisé permettant de récupérer une part variable représentant généralement de 5 % à 60 % de la chaleur produite dans le procédé de combustion en boucle chimique. Un conduit (non représentée) permet de soutirer les particules de la masse active oxydo-réductrice de la zone tampon vers la quatrième zone d'oxydation 7 pour oxyder à nouveau celles-ci.

De la zone de séparation 6, une partie des particules lourdes ayant décanté (majoritairement des particules de la masse active oxydo-réductrice) peut être extraite par une conduite (non représentée) pour être recyclée vers la zone de réaction 4. Il est ainsi possible éventuellement de favoriser l'homogénéité de température dans les zones de réaction 4, 5 et dans la zone de séparation 6.

La quatrième zone de réaction 7 opère en lit fluidisé à une température généralement comprise entre 700°C et 1200°C, de préférence entre 950 °C et 1100°C, en fonction du débit de circulation des particules de la masse active oxydo-réductrice entre ce réacteur et les zones de combustion et de la capacité de transfert d'oxygène du matériau.

Une fois les particules de porteur d'oxygène réoxydées, celles-ci sont ensuite renvoyées vers la deuxième zone de réaction 4. L'effluent gazeux 10 en sortie du réacteur 7 est appauvri en oxygène.

Bien que non représenté dans la figure 1, un dispositif de séparation gaz/solide de type cyclone est de préférence disposé en aval du réacteur 7 pour permettre de séparer en sortie dudit réacteur le gaz appauvri en oxygène et les particules de la masse active oxydo-réductrice.

Un deuxième mode de réalisation du procédé et du dispositif selon l'invention est illustré à la figure 2. Ce deuxième mode de réalisation diffère du premier mode de réalisation de l'invention illustré à la figure 1 essentiellement en ce que les première, deuxième et troisième zones de réaction (3, 4, 5) forment respectivement trois parties successives d'un seul et même réacteur 15. Selon ce mode de réalisation, les étapes de vaporisation partielle de la charge liquide, de gazéification du coke et de combustion sont réalisées dans un seul réacteur 15 dont les sections de passage peuvent varier en fonction de l'élévation. La première partie à la base du réacteur 15 comprend la première zone de réaction 3, dans laquelle est réalisée la vaporisation partielle de la charge liquide 2 au contact des particules de solide chaud 1. Cette première partie du réacteur est sensiblement allongée et verticale (on utilise généralement le terme de "riser" en anglais), et débouche dans une deuxième partie au centre du réacteur 15 comprenant la deuxième zone de réaction 4, dans laquelle est réalisée la gazéification du coke des particules du solide 1 et la combustion de la charge liquide partiellement vaporisée et du gaz issu de la gazéification du coke au contact des particules de la masse active oxydo-réductrice 12b. Cette deuxième partie 4 se prolonge par une troisième partie du réacteur 15 comprenant la troisième zone de réaction 5. Cette troisième partie 5 du réacteur 15 est sensiblement allongée et verticale. Selon cette configuration, la deuxième partie 4 du réacteur 15 a une section plus grande que la section de la première partie 3 et que la section de la troisième partie 5 du réacteur 15.

Cette configuration d'un réacteur unique 15 pour les trois zones réactionnelles (3, 4, 5) permet notamment d'obtenir un dispositif plus compact, simplifie le dimensionnement et l'ingénierie de l'installation, et minimise les pertes thermiques.

La charge hydrocarbonée liquide 2 et le gaz de fluidisation 14 sont injectés en bas de la première partie (riser) du réacteur 15, à l'aide de préférence d'un atomiseur de charge. Le solide 1 sous forme de particules est ensuite injecté dans cette même première partie du réacteur 15 afin de volatiliser partiellement la charge liquide et former du coke su les particules du solide 1. La section du réacteur 15 est plus large dans sa deuxième partie 4 afin d'augmenter le temps

de séjour de la phase gaz et de la phase solide dans cette zone de réaction. Cela permet d'assurer l'avancement de la gazéification du coke déposé à la surface des particules du solide 1, qui est une réaction contraignante du point de vue cinétique. La section du réacteur 15 est réduite dans sa troisième partie surmontant la deuxième partie, où est finalisée la combustion au sein d'un lit en phase diluée.

La configuration du réacteur 15 telle que représentée schématiquement à la figure 2 n'est pas limitative, et d'autres configurations dans lesquelles la section du réacteur unique varie sont possibles, par exemple l'utilisation d'un réacteur unique pour seulement les étapes de vaporisation et gazéification-combustion, ou pour les étapes de gazéification-combustion et finalisation de la combustion, ou des formes de réacteur différentes.

La séparation des particules des deux types (masse active oxydo-réductrice ( 12a, 12b, 12c) et solide 1) est effectuées dans une zone de séparation 6 à la sortie du riser 5 par différence de masse. Les particules du transporteur d'oxygène plus lourdes sont soutirées dans la partie inférieure du séparateur 6 et les particules du solide 1 sont extraites par le haut du séparateur avec les gaz issus de la combustion. Les particules du solide 1 sont ensuite séparées du flux gazeux issu de la combustion dans un cyclone 8, et sont avantageusement recyclées vers la zone réactionnelle 3 du réacteur à travers un siphon pour démarrer un nouveau cycle. Les particules du transporteur d'oxygène sont conduites vers le réacteur d'oxydation 7, le débit étant de préférence contrôlé par une vanne non mécanique de type vanne en L permettant de contrôler le débit de particules par injection contrôlée d'un gaz d'insufflation en amont d'un coude dans un lit de transport dans lequel un gaz est injecté pour transporter les particules. Différentes configurations peuvent être utilisées pour le réacteur d'oxydation 7. Un dispositif de séparation gaz/solide 16 de type cyclone est de préférence disposé en aval du réacteur 7 pour permettre de séparer en sortie dudit réacteur le gaz appauvri en oxygène et les particules de la masse active oxydo-réductrice 12a. Un lit fluidisé circulant est par exemple utilisé, dans lequel un siphon 17 avec deux sorties divise le flux de particules 12a en deux sous-flux 12c et 12b, le sous-flux 12c retournant vers le réacteur d'oxydation 7, et le sous-flux 12b retournant vers le réacteur de gazéification-combustion 4. Avantageusement, des moyens d'échange de chaleur 18, qui peuvent être des tubes en paroi ou dans le lit fluidisé, permettent de récupérer une part de la chaleur produite dans le procédé de combustion en boucle chimique (par exemple de 5 % à 60 % de la chaleur produite).

Les charges liquides pouvant être utilisées dans ce procédé de boucle chimique de combustion en lit fluidisé concernent toute fraction hydrocarbonée liquide provenant de la production ou du raffinage de pétrole dont le point d'ébullition dans les conditions atmosphériques est majoritairement supérieur à 340°C (c'est-à-dire toute coupe dont la courbe de distillation fait apparaître que moins de 10 % de ses composants bout à une température inférieure à 340°C).

Les charges concernées sont notamment les coupes de type résidus atmosphériques (résidus de distillation menée dans les conditions atmosphériques); ou de préférence les coupes de type résidus sous vide (résidus de distillation menée sous vide) pour lesquelles moins de 10 % des composants a un point d'ébullition inférieur à 500°C; ou enfin les résidus de procédés de désasphaltage constitués du précipité obtenu après contact avec un solvant paraffinique constitué d'un alcane dont le nombre d'atomes de carbone est compris entre 3 et 7.

La charge contient donc majoritairement des fractions lourdes difficilement convertibles et non intégrables dans les bases carburant, seules ou en mélange, telles que les fuels de soute, les résidus de distillation atmosphériques ou de distillation sous vide, les résidus de procédé de conversion (hydroconversion en lit bouillonnant, FCC...), les asphaltes issus des procédés de désasphaltage, notamment désasphaltage au propane, butane, pentane, hexane, heptane, ou des bitumes (par exemple fractions de bruts lourds du Canada non distillables).

Le pourcentage de résidu solide résultant de la vaporisation et de la pyrolyse d'un produit pétrolier est défini par son carbone Conradson. Le procédé selon l'invention permet de valoriser des charges lourdes ayant un carbone Conradson allant jusqu'à 40 %.

De même, le procédé selon l'invention est avantageusement applicable à des charges lourdes ayant une teneur en asphaltènes précipitant dans l'heptane allant jusqu'à 25 %.

Le solide 1 jouant le rôle de porteur de coke est sous forme de particules, et présente des propriété physiques, notamment une densité et une granulométrie, telles que les particules sont de préférence de type A selon la classification de Geldart. Ainsi, la séparation entre ces particules et celles de la masse active oxydo-réductrice peut être envisagée dans le procédé selon l'invention.

Tout solide présentant de telles propriétés peut être utilisé dans le procédé selon l'invention. Le solide 1 peut être, de manière non limitative, un catalyseur usagé de craquage catalytique, du coke de pétrole, du calcaire ou du sable.

Parmi les avantages liés à l'utilisation d'un catalyseur de craquage catalytique usagé, on peut citer les suivants :

- de tels catalyseurs représentent des déchets habituellement peu valorisés, et leur utilisation dans le procédé selon l'invention permet leur recyclage;
- il peut ne pas être nécessaire de réaliser une étape de mise en forme desdits catalyseurs de craquage catalytique avant leur utilisation dans le procédé selon l'invention car ceux-ci l'ont déjà été pour le procédé de craquage catalytique. Dans ce dernier, le catalyseur est sous forme de particules et circule en continu entre une zone réactionnelle et une zone de régénération, les particules appartenant au groupe A de la classification périodique de Geldart, avec

de préférence un diamètre moyen (diamètre de Sauter) des particules compris entre 50 microns et 100 microns, préférentiellement autour de 70 microns, et la masse volumique de grain sera comprise entre 1000 kg/$m^3$ et 3500 kg/$m^3$. La distribution granulométrique de la poudre utilisée dans le procédé de craquage catalytique est de préférence étendue. De telles propriétés peuvent être atteinte grâce à une mise en forme du catalyseur par des techniques telles que le séchage par atomisation ("spray drying"). Dans ces conditions, il est possible de fabriquer des poudres dont le diamètre moyen est compris entre 50 microns et 100 microns, mais qui contiennent des quantités importantes de fines particules (préférentiellement de 5 % à 20 % poids);

- de tels catalyseurs peuvent présenter la capacité d'emprisonner les métaux lourds contenus dans le combustible, par exemple du nickel, du vanadium, ou du fer, qui peuvent contribuer modestement à la capacité de transfert d'oxygène ;
- l'utilisation d'un catalyseur de craquage catalytique usagé permet le craquage catalytique de la charge liquide vaporisée lors de procédé selon l'invention, ce qui améliore la cinétique de combustion en présence des particules de la masse active oxydo-réductrice favorisant la décomposition de molécules lourdes en molécules plus petites et plus réactives.

De tels catalyseurs sont utilisés dans les procédés de craquage catalytique où la charge est convertie par la mise en oeuvre de réactions de craquage par catalyse acide. Il est bien connu que l'acidité du catalyseur peut être obtenue en utilisant des solides à base de Silice et d'Alumine, ou de structures cristallines complexes comme les zéolithes. Le catalyseur de craquage catalytique comprend en général une ou plusieurs zéolithes. La zéolithe la plus couramment utilisée est la zéolithe USY. D'autres zéolithes comme la ZSM-5 peuvent être par exemple utilisées. Ces dernières peuvent être intégrées dans une matrice de silice alumine de composition variable. Dans un catalyseur de craquage catalytique usagé, le rapport Si/Al de la zéolithe est généralement voisin de 4 à 10, souvent voisin de 5 à 6. Les catalyseurs peuvent parfois contenir des oxydes de terres rares jusqu'à 5 % en poids.

Le solide 1 peut être du coke de pétrole. Dans ce cas, le solide 1 est avantageusement lui-même un combustible qui contribue à améliorer les performances du procédé en termes de taux de captage de $CO_2$ et/ou de production d'énergie. Il s'agit alors d'une co-combustion de charges hydrocarbonées liquides et solides. Dans le cas de l'utilisation de coke de pétrole, un dispositif d'attrition est de préférence positionné dans la première zone de réaction 3, comprenant par exemple un système d'injection de gaz à haute vitesse, pour permettre de contrôler la granulométrie du coke de pétrole dans l'installation et éviter une croissance trop importante de certaines particules liée au dépôt de coke s'enrobant sur les particules pendant la vaporisation et pouvant également générer une agglomération des particules entre elles.

L'utilisation de calcaire ($CaCO_3$) en tant que solide 1 est avantageuse car le calcaire constitue une source facilement et largement disponible à un cout intéressant. Dans les conditions du procédé, le calcaire est transformé en oxyde de calcium CaO, qui est communément utilisé comme agent de DeSOx des fumées de combustion. L'utilisation de calcaire dans le procédé selon l'invention présente donc le double avantage de permettre le transport du coke formé lors du procédé et ainsi d'éviter le cokage de la masse active oxydo-réductrice utilisée pour la combustion, tout en permettant la désulfuration des gaz issus de la combustion dans les zones de combustion.

Les principaux avantages liés à l'utilisation de sable en tant que solide 1 sont le faible coût et la disponibilité de ce matériau.

## Exemples

### Exemple 1: unité de combustion en boucle chimique de charges liquides sans porteur de coke

Dans ce premier exemple, les performances d'une unité de combustion opérant par combustion en boucle chimique et traitant une charge hydrocarbonée liquide type constituée d'un résidu sous vide pétrolier, dont la composition chimique est donnée dans le tableau 1 ci-dessous, ont été calculées. Dans cet exemple, il n'y a pas d'utilisation de particules d'un deuxième type jouant le rôle de porteur de coke.

L'unité CLC en lit fluidisé comprend un réacteur "fuel" ou s'opère la combustion de la charge liquide, introduite avec un gaz de fluidisation, au contact de la masse active oxydo-réductrice sous forme de particules et un réacteur "air" dans lequel est réalisé l'oxydation de la masse active oxydo-réductrice au contact d'air, qui circule entre les deux réacteurs. L'air sortant du réacteur air est appauvri en $O_2$ et comprend 10 % de $CO_2$. Les effluents gazeux en sortie du réacteur fuel comprennent de la vapeur d'eau et 90% de $CO_2$. Le flux de particules allant du réacteur fuel vers le réacteur air comprend les particules de la masse active oxydo-réductrice partiellement réduites ainsi que du coke non oxydé.

Tableau 1

| Elements | % poids |
|---|---|
| C | 85,2 |

(suite)

| Elements | % poids |
|---|---|
| H | 10,3 |
| N | 0,5 |
| S | 4 |

La quantité de résidu traitée par cette unité est de 30 kg/s. Pour cet exemple 1, deux rendements en coke ont été pris en compte:

- cas A: 30 % de rendement en coke pour un résidu de composition similaire à la composition type et pour lequel 30 % du résidu se transforme en coke, soit environ 9 kg/s de coke formé, et 70 % du résidu est vaporisé.
- cas B: 15% de rendement en coke pour un résidu de composition similaire à la composition type et plus léger que le résidu du cas A, et pour lequel 15 % du résidu se transforme en coke et 85% du résidu est vaporisé.

En outre, on considère comme base de calcul une efficacité de captage du $CO_2$ de 90%, c'est à dire que 90% du $CO_2$ sort dans l'effluent gazeux du réacteur fuel. Ceci correspond à un taux de conversion du coke de 66,7 % pour le cas A et de 33,3 % pour le cas B.

Le transporteur d'oxygène est utilisé à un taux R0ΔX de 2 %, c'est à dire que pour chaque 100 grammes de la masse active oxydo-réductrice, 2 grammes d'oxygène sont utilisées. En tenant compte ce taux d'utilisation, la circulation de particules de la masse active oxydo-réductrice requises pour assurer la combustion de 90 % du résidu est de 4407,6 kg/s pour le cas A et de 4339,9 kg/s pour le cas B (taux de cokage du solide de 20 %, correspondant à 20 g de coke pour chaque 100 g de transporteur d'oxygène coké).

La conversion du coke en fonction du temps de séjour et de la température du réacteur a été calculée dans les conditions opératoires du réacteur fuel pour les cas A et B données dans le tableau 2.

Tableau 2

| Conditions opératoires du réacteur fuel | Cas A | Cas B |
|---|---|---|
| Température (°C) | 950 | 950 |
| Temps séjour (secondes) | 369,9 | 92,2 |
| Conversion du coke (%) | 66,7 | 33,3 |
| Inventaire du transporteur d'oxygène (tonnes) | 1630 | 400 |

Exemple 2: unité de combustion en boucle chimique de charges liquides avec porteur de coke

Dans ce deuxième exemple, les performances d'une unité de combustion opérant par combustion en boucle chimique et traitant une charge hydrocarbonée liquide constituée d'un résidu sous vide pétrolier de même type que celle de l'exemple 1 (voir analyse chimique donnée dans le tableau 1) ont été calculées. Dans cet exemple on met en oeuvre le procédé selon l'invention, dans lequel des particules distinctes de celles du transporteur d'oxygène sont utilisées pour porter le coke formé lors de la vaporisation de la charge.

Cette unité est composée de dispositifs déjà décrits en relation avec la figure 1.

La quantité de résidu traitée par cette unité est de 30 kg/s. Comme pour le premier exemple, deux rendements en coke ont été pris en compte:

- cas A: 30 % de rendement en coke pour un résidu de composition similaire à la composition type et pour lequel 30 % du résidu se transforme en coke, soit environ 9 kg/s de coke formé, et 70 % du résidu est vaporisé; et
- cas B: 15 % de rendement en coke pour un résidu de composition similaire à la composition type et plus léger que le résidu du cas A, et pour lequel 15 % du résidu se transforme en coke et 85 % du résidu est vaporisé.

On considère également comme base de calcul une efficacité de captage du $CO_2$ de 90 %, c'est à dire que 90% du $CO_2$ sort dans l'effluent gazeux du réacteur fuel. Ceci correspond à un taux de conversion du coke de 66,7 % pour le cas A et de 33,3 % pour le cas B.

Le transporteur d'oxygène est utilisé à un taux R0ΔX de 2 %, c'est à dire que pour chaque 100 grammes de

la masse active oxydo-réductrice, 2 grammes d'oxygène sont utilisées. En tenant compte ce taux d'utilisation, la circulation de particules de la masse active oxydo-réductrice requises pour assurer la combustion de 90% du résidu est de 4317,4 kg/s pour les cas A et B.

Le taux de cokage du solide porteur de coke est fixé pour ce deuxième exemple à 20 %, ce qui correspond à un débit pour les particules du solide porteur de coke de 90,2 kg/s pour le cas A, et de 45,1 kg/s pour le cas B, permettant le dépôt de coke lors de la vaporisation de la charge liquide.

La conversion du coke en fonction du temps de séjour et de la température du réacteur a été calculée dans les conditions opératoires du réacteur fuel pour les cas A et B données dans le tableau 3.

Tableau 3

| **Conditions opératoires du réacteur fuel** | **Cas A** | **Cas B** |
|---|---|---|
| Température (°C) | 950 | 950 |
| Temps séjour (secondes) | 135,4 | 41,4 |
| Conversion du coke par passe (%) | 42,3 | 18,3 |
| Conversion du coke globale (%) | 66,7 | 33,3 |
| Inventaire du transporteur d'oxygène (tonnes) | 584 | 179 |

Ces résultats illustrent les performances du procédé et du dispositif selon l'invention, notamment que le cokage de la masse active oxydo-réductrice est grandement limité comparativement à un procédé CLC selon l'art antérieur (exemple 1) n'utilisant pas de particules distinctes de celles de la masse tel que décrit, ainsi que le montre les chiffres concernant l'inventaire du transporteur d'oxygène. Grâce à la présente invention, la quantité de masse active oxydo-réductrice utilisée est divisée par plus de 3 comparée à l'exemple 1 pour le cas A (résidus plus lourds),et par plus de deux pour le cas B (résidus plus légers).

## Revendications

1. Procédé de combustion d'une charge hydrocarbonée liquide par oxydo-réduction en boucle chimique réalisé en lit fluidisé dans lequel on vaporise partiellement la charge hydrocarbonée liquide (2) au contact d'un solide chaud (1) sous forme de particules pour former une charge liquide partiellement vaporisée (19) et pour former du coke sur ledit solide (1), avant de mettre en contact la charge liquide partiellement vaporisée (19) avec une masse active oxydo-réductrice sous forme de particules (12, 12a, 12b, 12c) distincte du solide chaud pour réaliser la combustion de la charge liquide partiellement vaporisée (19), dans lequel :

   - on vaporise partiellement la charge liquide au contact des particules du solide chaud (1) dans une première zone de réaction (3), les particules dudit solide (1) étant des particules de groupe A selon la classification de Geldart ;
   - on envoie les effluents issus de la première zone de réaction (3) dans une deuxième zone de réaction (4) dans laquelle on réalise une gazéification du coke des particules du solide (1) et on réalise une combustion de la charge liquide partiellement vaporisée (19) et du gaz issu de la gazéification du coke par une mise en contact avec les particules de la masse active oxydo-réductrice (12, 12a, 12b, 12c), lesdites particules de la masse active oxydo-réductrice (12, 12a, 12b, 12c) étant des particules de groupe B selon la classification de Geldart ;
   - on poursuit la combustion de la charge liquide partiellement vaporisée (19) et/ou du gaz issu de la gazéification du coke issus de la deuxième zone de réaction (4) dans une troisième zone de réaction (5) ;
   - on sépare au sein du mélange issu de la troisième zone de réaction (5) la majorité des particules de la masse active oxydo-réductrice (12, 12a, 12b, 12c) et un flux gazeux contenant la majorité des particules du solide (1) dans une zone de séparation (6);
   - on réalise une réoxydation des particules de la masse active oxydo-réductrice (12, 12a, 12b, 12c) issues de la zone de séparation (6) dans une quatrième zone de réaction (7) avant de renvoyer au moins une partie desdites particules de la masse active oxydo-réductrice (12, 12a, 12b, 12c) dans la deuxième zone de réaction (4).

2. Procédé selon la revendication 1, dans lequel on sépare au sein du flux gazeux contenant la majorité des particules du solide (1) issu de la zone de séparation (6) les particules du solide (1) et le gaz avant de renvoyer lesdites

particules du solide (1) dans la première zone de réaction (3).

**3.** Procédé selon l'une des revendications précédentes, dans lequel la charge hydrocarbonée liquide (2) est atomisée avec un gaz d'atomisation pour former des gouttelettes de liquide finement dispersées dans le gaz d'atomisation avant d'être mise en contact avec les particules du solide (1) dans la première zone de réaction (3).

**4.** Procédé selon l'une des revendications précédentes, dans lequel le solide (1) est choisi parmi les matériaux suivants: un catalyseur de craquage catalytique usé, du coke de pétrole, du sable, du calcaire.

**5.** Procédé selon l'une des revendications précédentes, dans lequel les particules du solide (1) ont une distribution granulométrique et une densité inférieures à celles des particules de la masse active oxydo-réductrice (12, 12a, 12b, 12c).

**6.** Procédé selon la revendication 5, dans lequel les particules du solide (1) ont une distribution granulométrique telle que plus de 90 % des particules ont une taille comprise entre 50 micromètres et 150 micromètres et une densité comprise entre 1000 $kg/m^3$ et 1500 $kg/m^3$, et les particules de la masse active oxydo-réductrice (12, 12a, 12b, 12c) ont une distribution granulométrique telle que plus de 90 % des particules ont une taille comprise entre 100 micromètres et 500 micromètres et ont une densité comprise entre 2500 $kg/m^3$ et 4500 $kg/m^3$.

**7.** Procédé selon l'une des revendications précédentes, dans lequel la proportion massique de coke déposée sur le solide (1) dans la première zone de réaction (3) est comprise entre 1 % et 20%.

**8.** Procédé selon l'une des revendications précédentes, dans lequel les particules du solide (1) mises en contact avec la charge liquide (2) dans la première zone de réaction (3) ont une température comprise entre 600°C et 1000°C.

**9.** Procédé selon l'une des revendications précédentes, dans lequel :

- la vitesse superficielle du gaz dans la première zone de réaction (3) est comprise entre 1 m/s et 15 m/s, le temps de séjour moyen de l'ensemble des particules est compris entre 1 seconde et 20 secondes ;
- la vitesse superficielle du gaz dans la deuxième zone de réaction (4) est comprise entre 0,3 m/s et 3 m/s, et le temps de séjour moyen de l'ensemble des particules est compris entre 0,25 minutes et 20 minutes ;
- la vitesse superficielle du gaz dans la troisième zone de réaction (5) est comprise entre 1 m/s et 30 m/s, le temps de séjour moyen du gaz est compris entre 1 seconde et 20 secondes, et le temps de séjour moyen de l'ensemble des particules est compris entre 2 secondes et 1 minute.

**10.** Dispositif de combustion en boucle chimique d'une charge hydrocarbonée liquide par oxydo-réduction en lit fluidisé comprenant :

- une première zone de réaction (3) pour la vaporisation partielle de la charge liquide hydrocarbonée (2) et le dépôt de coke sur un solide chaud (1) sous forme de particules avant une mise en contact de ladite charge liquide partiellement vaporisée (19) avec une masse oxydo-réductrice sous forme de particules (12, 12a, 12b, 12c) distincte du solide chaud, ladite première zone de réaction (3) comprenant:

  ◦ des moyens d'injection de la charge liquide hydrocarbonée (2),
  ◦ des moyens d'alimentation en ledit solide (1), et
  ◦ des moyens d'injection d'un gaz de fluidisation ;

- une deuxième zone de réaction (4) pour la gazéification du coke des particules du solide (1) et pour la combustion de la charge liquide partiellement vaporisée (19) et du gaz issu de la gazéification du coke, située en aval de la première zone de réaction (3) et comprenant des moyens d'alimentation en une masse active oxydo-réductrice sous forme de particules (12, 12a, 12b, 12c) distincte du solide chaud;
- une troisième zone de réaction (5) pour finaliser la combustion de la charge liquide partiellement vaporisée (19) et/ou du gaz issu de la gazéification du coke ;
- une zone de séparation (6) pour séparer au sein d'un mélange issu de la troisième zone de réaction (5) la majorité des particules de la masse active oxydo-réductrice (12, 12a, 12b, 12c) et un flux gazeux contenant la majorité des particules du solide (1), comprenant:

  ◦ une conduite d'admission pour ledit mélange,

◦ une conduite d'évacuation pour les particules de la masse active oxydo-réductrice (12, 12a, 12b, 12c), et
◦ une conduite de sortie pour le flux gazeux contenant la majorité des particules du solide (1) ;

- une quatrième zone de réaction (7) pour la réoxydation des particules de la masse active oxydo-réductrice (12, 12a, 12b, 12c) issues de la zone de séparation (6) comprenant:

◦ des moyens d'alimentation (13) en particules de la masse active oxydo-réductrice (12, 12a, 12b, 12c) issues de la zone de séparation (6),
◦ des moyens d'injection d'un gaz d'oxydation (9), et
◦ des moyens d'évacuation d'un flux gazeux comprenant les particules de la masse active oxydo-réductrice (12, 12a, 12b, 12c) réoxydées.

**11.** Dispositif selon la revendication 10, dans lequel les moyens d'injection de la charge liquide hydrocarbonée (2) de la première zone de réaction (3) comprennent des moyens de mélange de la charge liquide (2) avec un gaz d'atomisation et des moyens d'atomisation de la charge liquide (2).

**12.** Dispositif selon l'une des revendications 10 et 11, comprenant en outre une zone de séparation gaz-solide (8) pour séparer les particules du solide (1) et le gaz au sein du flux gazeux contenant la majorité desdites particules (1) issu de la zone de séparation (6) et recycler lesdites particules (1) dans la première zone de réaction (3).

**13.** Dispositif selon l'une des revendications 10 à 12, dans lequel les première, deuxième et troisième zones de réaction (3, 4, 5) forment respectivement trois parties successives d'un seul et même réacteur (15), une première partie à la base du réacteur comprenant la première zone de réaction (3) étant sensiblement allongée et verticale et débouchant dans une deuxième partie au centre du réacteur (15) comprenant la deuxième zone de réaction (4), ladite deuxième partie se prolongeant par une troisième partie du réacteur (15) comprenant la troisième zone de réaction (5) sensiblement allongée et verticale, ladite deuxième partie du réacteur ayant une section plus grande que celle des première et troisième parties du réacteur (15).

**14.** Dispositif selon l'une des revendications 10 à 12, dans lequel chaque zone de réaction (3, 4, 5) correspond à un réacteur indépendant, les réacteurs indépendants étant connectés par des conduites permettant le transport des effluents comprenant les particules.

## Patentansprüche

**1.** Verfahren zur Verbrennung einer flüssigen Kohlenwasserstoffcharge durch Oxidations-Reduktion in einer chemischen Schleife, durchgeführt im Fließbett, bei dem teilweise die flüssige Kohlenwasserstoffcharge (2) in Kontakt mit einem heißen Feststoff (1) in Form von Partikeln verdampft wird, um eine teilweise verdampfte flüssige Charge (19) zu bilden, und um Koks auf dem Feststoff (1) zu bilden, bevor die teilweise verdampfte flüssige Charge (19) mit einer aktiven Oxidations-Reduktions-Masse in Form von Partikeln (12, 12a, 12b, 12c), die sich von dem Feststoff unterscheidet, in Kontakt gebracht wird, um die Verbrennung der teilweise verdampften flüssigen Charge (19) durchzuführen, wobei:

- die flüssige Charge in Kontakt mit den Partikeln des heißen Feststoffes (1) in einer ersten Reaktionszone (3) teilweise verdampft wird, wobei die Partikel des Feststoffes (1) Partikel der Gruppe A nach der Geldart-Klassifikation sind;
- die aus der ersten Reaktionszone (3) kommenden Abflüsse in eine zweite Reaktionszone (4) geschickt werden, in der eine Vergasung des Koks der Partikel des Feststoffes (1) durchgeführt wird, und eine Verbrennung der teilweise verdampften flüssigen Charge (19) und des aus der Vergasung des Koks stammenden Gases durch Inkontaktbringen mit den Partikeln der aktiven Oxidations-Reduktions-Masse (12, 12a, 12b, 12c) durchgeführt wird, wobei die Partikel der aktiven Oxidations-Reduktions-Masse (12, 12a, 12b, 12c) Partikel der Gruppe B nach der Geldart-Klassifikation sind;
- die Verbrennung der teilweise verdampften flüssigen Charge (19) und/oder des aus der Vergasung des Koks stammenden Gases aus der zweiten Reaktionszone (4) in einer dritten Reaktionszone (5) fortgesetzt wird;
- innerhalb des aus der dritten Reaktionszone (5) stammenden Gemisches die Mehrzahl der Partikel der aktiven Oxidations-Reduktions-Masse (12, 12a, 12b, 12c) und ein Gaststrom, der die Mehrzahl der Partikel des Feststoffes (1) enthält, in einer Trennungszone (6) getrennt werden;
- eine Reoxidation der Partikel der aktiven Oxidations-Reduktions-Masse (12, 12a, 12b, 12c) aus der Trennungszone (6) in einer vierten Reaktionszone (7) durchgeführt wird, bevor mindestens ein Teil der Partikel der aktiven Oxidations-Reduktions-Masse (12, 12a, 12b, 12c) in die zweite Reaktionszone (4) zurückgeschickt wird.

**2.** Verfahren nach Anspruch 1, bei dem innerhalb des Gasflusses, der die Mehrzahl der Partikel des Feststoffes (1) aus der Trennungszone (6) enthält, die Partikel des Feststoffes (1) und das Gas getrennt werden, bevor die Partikel des Feststoffes (1) in die erste Reaktionszone (3) zurückgeschickt werden.

**3.** Verfahren nach einem der vorhergehenden Ansprüche, bei dem die flüssige Kohlenwasserstoffcharge (2) mit einem Zerstäubungsgas zerstäubt wird, um in dem Zerstäubungsgas fein verstreute Flüssigkeitstropfen zu bilden, bevor sie mit den Partikeln des Feststoffes (1) in der ersten Reaktionszone (3) in Kontakt gebracht wird.

**4.** Verfahren nach einem der vorhergehenden Ansprüche, bei dem der Feststoff (1) unter den folgenden Materialien ausgewählt ist: einem verbrauchten Katalysator zum katalytischen Cracken, Petrolkoks, Sand, Kalkstein.

**5.** Verfahren nach einem der vorhergehenden Ansprüche, bei dem die Partikel des Feststoffes (1) eine geringere granulometrische Verteilung und Dichte als jene der Partikel der aktiven Oxidations-Reduktions-Masse (12, 12a, 12b, 12c) haben.

**6.** Verfahren nach Anspruch 5, bei dem die Partikel des Feststoffes (1) eine derartige granulometrische Verteilung haben, dass mehr als 90 % der Partikel eine Größe zwischen 50 Mikrometer und 150 Mikrometer und eine Dichte zwischen 1000 $kg/m^3$ und 1500 $kg/m^3$ haben, und die Partikel der aktiven Oxidations-Reduktions-Masse (12, 12a, 12b, 12c) eine derartige granulometrische Verteilung haben, dass mehr als 90 % der Partikel eine Größe zwischen 100 Mikrometer und 500 Mikrometer und eine Dichte zwischen 2500 $kg/m^3$ und 4500 $kg/m^3$ haben.

**7.** Verfahren nach einem der vorhergehenden Ansprüche, bei dem der Massenanteil von auf dem Feststoff (1) abgelagertem Koks in der ersten Reaktionszone (3) zwischen 1 % und 20 % beträgt.

**8.** Verfahren nach einem der vorhergehenden Ansprüche, bei dem die Partikel des Feststoffes (1), die mit der flüssigen Charge (2) in der ersten Reaktionszone (3) in Kontakt gebracht werden, eine Temperatur zwischen 600 °C und 1000 °C haben.

**9.** Verfahren nach einem der vorhergehenden Ansprüche, bei dem:

- die Oberflächengeschwindigkeit des Gases in der ersten Reaktionszone (3) zwischen 1 m/s und 15 m/s beträgt, die durchschnittliche Aufenthaltszeit der Gesamtheit der Partikel zwischen 1 Sekunde und 20 Sekunden beträgt;
- die Oberflächengeschwindigkeit des Gases in der zweiten Reaktionszone (4) zwischen 0,3 m/s und 3 m/s beträgt, und die durchschnittliche Aufenthaltszeit der Gesamtheit der Partikel zwischen 0,25 Minuten und 20 Minuten beträgt;
- die Oberflächengeschwindigkeit des Gases in der dritten Reaktionszone (5) zwischen 1 m/s und 30 m/s beträgt, die durchschnittliche Aufenthaltszeit des Gases zwischen 1 Sekunde und 20 Sekunden beträgt, und die durchschnittliche Aufenthaltszeit der Gesamtheit der Partikel zwischen 2 Sekunden und 1 Minute beträgt.

**10.** Vorrichtung zur Verbrennung einer flüssigen Kohlenwasserstoffcharge durch Oxidations-Reduktion in einer chemischen Schleife im Fließbett, umfassend:

- eine erste Reaktionszone (3) für die teilweise Verdampfung der flüssigen Kohlenstoffcharge (2) und die Ablagerung von Koks auf einem heißen Feststoff (1) in Form von Partikeln vor dem Inkontaktbringen der teilweise verdampften flüssigen Charge (19) mit einer Oxidations-Reduktions-Masse in Form von Partikeln (12, 12a, 12b, 12c), die sich von dem heißen Feststoff unterscheidet, wobei die erste Reaktionszone (3) umfasst:

  * Mittel zum Einspritzen der flüssigen Kohlenwasserstoffcharge (2),
  * Mittel zum Zuführen des Feststoffes (1), und
  * Mittel zum Einspritzen eines Fluidisierungsgases;

- eine zweite Reaktionszone (4) zur Vergasung des Kokses der Partikel des Feststoffes (1) und zur Verbrennung der teilweise verdampften flüssigen Charge (19) und des aus der Vergasung des Kokses stammenden Gases, die sich stromabwärts zu der ersten Reaktionszone (3) befindet und Mittel zur Zuführung einer aktiven Oxidations-Reduktions-Masse in Form von Partikeln (12, 12a, 12b, 12c), die sich von dem heißen Feststoff unterscheidet, umfasst;
- eine dritte Reaktionszone (5), um die Verbrennung der teilweise verdampften flüssigen Charge (19) und/oder des aus der Vergasung des Kokses stammenden Gases abzuschließen;
- eine Trennungszone (6), um innerhalb eines aus der dritten Reaktionszone (5) stammenden Gemisches die Mehrzahl der Partikel der aktiven Oxidations-Reduktions-Masse (12, 12a, 12b, 12c) und einen Gasfluss, der die Mehrzahl der Partikel des Feststoffes (1) enthält, zu trennen, umfassend:

    * eine Zuleitung für das Gemisch,
    * eine Ableitung für die Partikel der aktiven Oxidations-Reduktions-Masse (12, 12a, 12b, 12c), und
    * eine Ausgangsleitung für den Gasfluss, der die Mehrzahl der Partikel des Feststoffes (1) enthält;

- eine vierte Reaktionszone (7) zur Reoxidation der Partikel der aktiven Oxidations-Reduktions-Masse (12, 12a, 12b, 12c), die aus der Trennungszone (6) stammen, umfassend:

    * Zuführmittel (13) von Partikeln der aktiven Oxidations-Reduktions-Masse (12, 12a, 12b, 12c), die aus der Trennungszone (6) stammen,
    * Mittel zum Einspritzen eines Oxidationsgases (9), und
    * Mittel zur Ableitung eines Gasflusses, umfassend die reoxidierten Partikel der aktiven Oxidations-Reduktions-Masse (12, 12a, 12b, 12c).

**11.** Vorrichtung nach Anspruch 10, bei der die Einspritzmittel der flüssigen Kohlenwasserstoffcharge (2) der ersten Reaktionszone (3) Mittel zum Mischen der flüssigen Charge (2) mit einem Zerstäubungsgase und Mittel zur Zerstäubung der flüssigen Charge (2) umfassen.

**12.** Vorrichtung nach einem der Ansprüche 10 und 11, ferner umfassend eine Gas-Feststoff-Trennungszone (8), um die Partikel des Feststoffes (1) und das Gas innerhalb des Gasflusses, der die Mehrzahl der Partikel (1) aus der Trennungszone (6) enthält zu trennen und die Partikel (1) in die erste Reaktionszone (3) rückzuführen.

**13.** Vorrichtung nach einem der Ansprüche 10 bis 12, bei der die erste, zweite und dritte Reaktionszone (3, 4, 5) jeweils drei aufeinanderfolgende Teile eines einzigen und selben Reaktors (15) bilden, wobei einer erster Teil an der Basis des Reaktors, der die erste Reaktionszone (3) umfasst, im Wesentlichen länglich und vertikal ist und in einen zweiten Teil in der Mitte des Reaktors (15) mündet, umfassend die zweite Reaktionszone (4), wobei sich der zweite Teil durch einen dritten Teil des Reaktors (15) verlängert, umfassend die dritte im Wesentlichen längliche und vertikale Reaktionszone (5), wobei der zweite Teil des Reaktors einen größeren Querschnitt als jener der ersten und dritten Teile des Reaktors (15) hat.

**14.** Vorrichtung nach einem der Ansprüche 10 bis 12, bei der jede Reaktionszone (3, 4, 5) einem unabhängigen Reaktor entspricht, wobei die unabhängigen Reaktoren durch Leitungen angeschlossen sind, die den Transport der die Partikel umfassenden Abflüsse ermöglichen.

## Claims

**1.** A method for chemical looping oxidation-reduction combustion of a liquid hydrocarbon feedstock carried out in a fluidized bed, wherein liquid hydrocarbon feed (2) is partly vaporized on contact with a hot solid (1) in form of particles so as to form a partly vaporized liquid feed (19) and to form coke on said solid (1), prior to contacting partly vaporized liquid feed (19) with a redox active mass in form of particles (12, 12a, 12b, 12c) distinct from the hot solid so as to achieve combustion of partly vaporized liquid feed (19), comprising:

- partly vaporizing the liquid feed on contact with hot solid particles (1) in a first reaction zone (3), the particles of said solid (1) being group A particles in Geldart's classification,
- sending the effluents from first reaction zone (3) to a second reaction zone (4) where gasification of the coke of solid particles (1) is performed, and combustion of partly vaporized liquid feed (19) and of the gas resulting from coke gasification is carried out through contact with redox active mass particles (12, 12a, 12b, 12c), said redox active mass particles (12, 12a, 12b, 12c) being group B particles in Geldart's classification,
- continuing the combustion of partly vaporized liquid feed (19) and/or of the gas resulting from coke gasification coming from second reaction zone (4) in a third reaction zone (5),
- separating within the mixture from third reaction zone (5) the major part of redox active mass particles (12,

12a, 12b, 12c) and a gas stream containing the major part of solid particles (1) in a separation zone (6),
- carrying out reoxidation of redox active mass particles (12, 12a, 12b, 12c) from separation zone (6) in a fourth reaction zone (7) prior to sending at least part of said redox active mass particles (12, 12a, 12b, 12c) back to second reaction zone (4).

**2.** A method as claimed in claim 1, wherein solid particles (1) and the gas are separated within the gas stream containing the major part of solid particles (1) from separation zone (6) prior to sending said solid particles (1) back to first reaction zone (3).

**3.** A method as claimed in any one of the previous claims, wherein liquid hydrocarbon feed (2) is atomized with an atomizing gas so as to form liquid droplets finely dispersed in the atomizing gas prior to being contacted with solid particles (1) in first reaction zone (3).

**4.** A method as claimed in any one of the previous claims, wherein solid (1) is selected from among the following materials: a used catalytic cracking catalyst, petroleum coke, sand, limestone.

**5.** A method as claimed in any one of the previous claims, wherein the grain size distribution and the density of solid particles (1) are lower than those of redox active mass particles (12, 12a, 12b, 12c).

**6.** A method as claimed in claim 5, wherein the grain size distribution of solid particles (1) is such that more than 90 % of the particles have a size ranging between 50 micrometers and 150 micrometers, and the density thereof ranges between 1000 $kg/m^3$ and 1500 $kg/m^3$, the grain size distribution of redox active mass particles (12, 12a, 12b, 12c) is such that more than 90 % of the particles have a size ranging between 100 micrometers and 500 micrometers, and the density thereof ranges between 2500 $kg/m^3$ and 4500 $kg/m^3$.

**7.** A method as claimed in any one of the previous claims, wherein the mass proportion of coke deposited on solid (1) in first reaction zone (3) ranges between 1 % and 20 %.

**8.** A method as claimed in any one of the previous claims, wherein solid particles (1) contacted with liquid feed (2) in first reaction zone (3) have a temperature ranging between 600°C and 1000°C.

**9.** A method as claimed in any one of the previous claims, wherein:

- the surface velocity of the gas in first reaction zone (3) ranges between 1 m/s and 15 m/s, the average residence time for all the particles ranges between 1 second and 20 seconds;
- the surface velocity of the gas in second reaction zone (4) ranges between 0.3 m/s and 3 m/s, the average residence time for all the particles ranges between 0.25 minutes and 20 minutes;
- the surface velocity of the gas in third reaction zone (5) ranges between 1 m/s and 30 m/s, the average residence time of the gas ranges between 1 second and 20 seconds, and the average residence time for all the particles ranges between 2 seconds and 1 minute.

**10.** A device for chemical looping redox combustion of a liquid hydrocarbon feed carried out in a fluidized bed, comprising:

- a first reaction zone (3) for partial vaporization of hydrocarbon liquid feed (2) and the coke deposit on a hot solid (1) in form of particles prior to contacting partly vaporized liquid feed (19) with a redox active mass in form of particles (12, 12a, 12b, 12c) distinct from the hot solid, said first reaction zone (3) including:

  * hydrocarbon liquid feed injection means (2),
  * means for feeding said solid (1), and
  * fluidization gas injection means;

- a second reaction zone (4) for gasification of the coke of solid particles (1) and for combustion of partly vaporized liquid feed (19) and of the gas resulting from coke gasification, arranged downstream from first reaction zone (3) and comprising means for feeding a redox active mass in form of particles (12, 12a, 12b, 12c) distinct from the hot solid,
- a third reaction zone (5) for completing the combustion of partly vaporized liquid feed (19) and/or of the gas resulting from coke gasification,
- a separation zone (6) for separating within a mixture from third reaction zone (5) the major part of redox active

mass particles (12, 12a, 12b, 12c) and a gas stream containing the major part of solid particles (1), including:

* a delivery line for said mixture,
* a discharge line for redox active mass particles (12, 12a, 12b, 12c), and
* an outlet line for the gas stream containing the major part of solid particles (1),

- a fourth reaction zone (7) for reoxidation of redox active mass particles (12, 12a, 12b, 12c) from separation zone (6), including:

* means (13) for feeding redox active mass particles (12, 12a, 12b, 12c) from separation zone (6),
* means for injecting an oxidation gas (9), and
* means for discharging a gas stream containing reoxidized redox active mass particles (12, 12a, 12b, 12c).

**11.** A device as claimed in claim 10, wherein liquid hydrocarbon feed injection means (2) of first reaction zone (3) comprise means for mixing liquid feed (2) with an atomizing gas and means for atomizing liquid feed (2).

**12.** A device as claimed in any one of claims 10 and 11, furthermore comprising a gas/solid separation zone (8) for separating solid particles (1) and the gas within the gas stream containing the major part of said particles (1) coming from separation zone (6) and for recycling said particles (1) to first reaction zone (3).

**13.** A device as claimed in any one of claims 10 to 12, wherein first, second and third reaction zones (3, 4, 5) respectively make up three successive parts of a single reactor (15), a first part at the base of the reactor comprising first reaction zone (3) being substantially elongate and vertical, and opening into a second part at the center of reactor (15) comprising second reaction zone (4), said second part being extended by a third part of reactor (15) comprising third reaction zone (5), substantially elongate and vertical, the section of said second part of the reactor being greater than that of the first and third parts of reactor (15).

**14.** A device as claimed in any one of claims 10 to 12, wherein each reaction zone (3, 4, 5) corresponds to an independent reactor, the independent reactors being connected by lines allowing the particle-containing effluents to be transported.

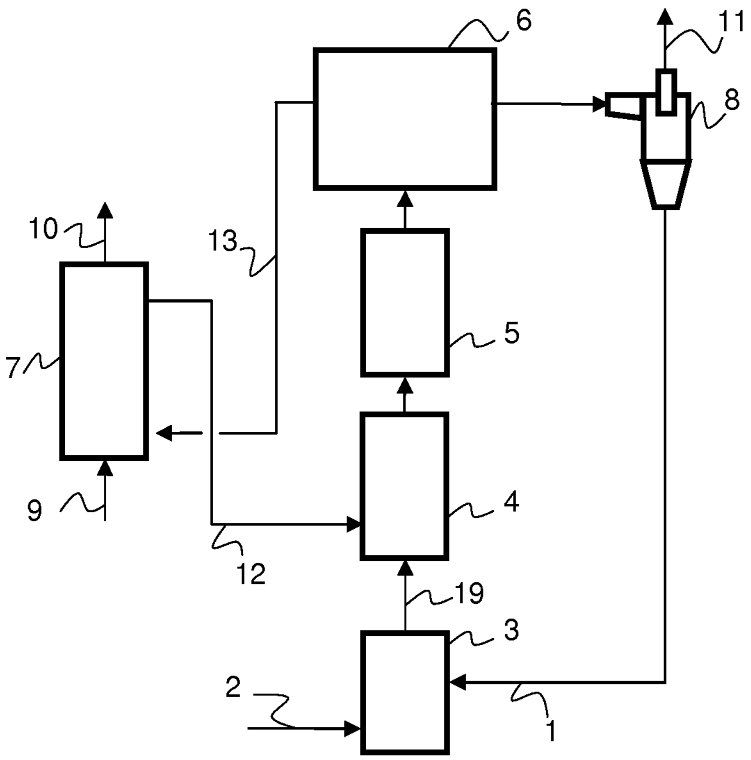


FIG. 1

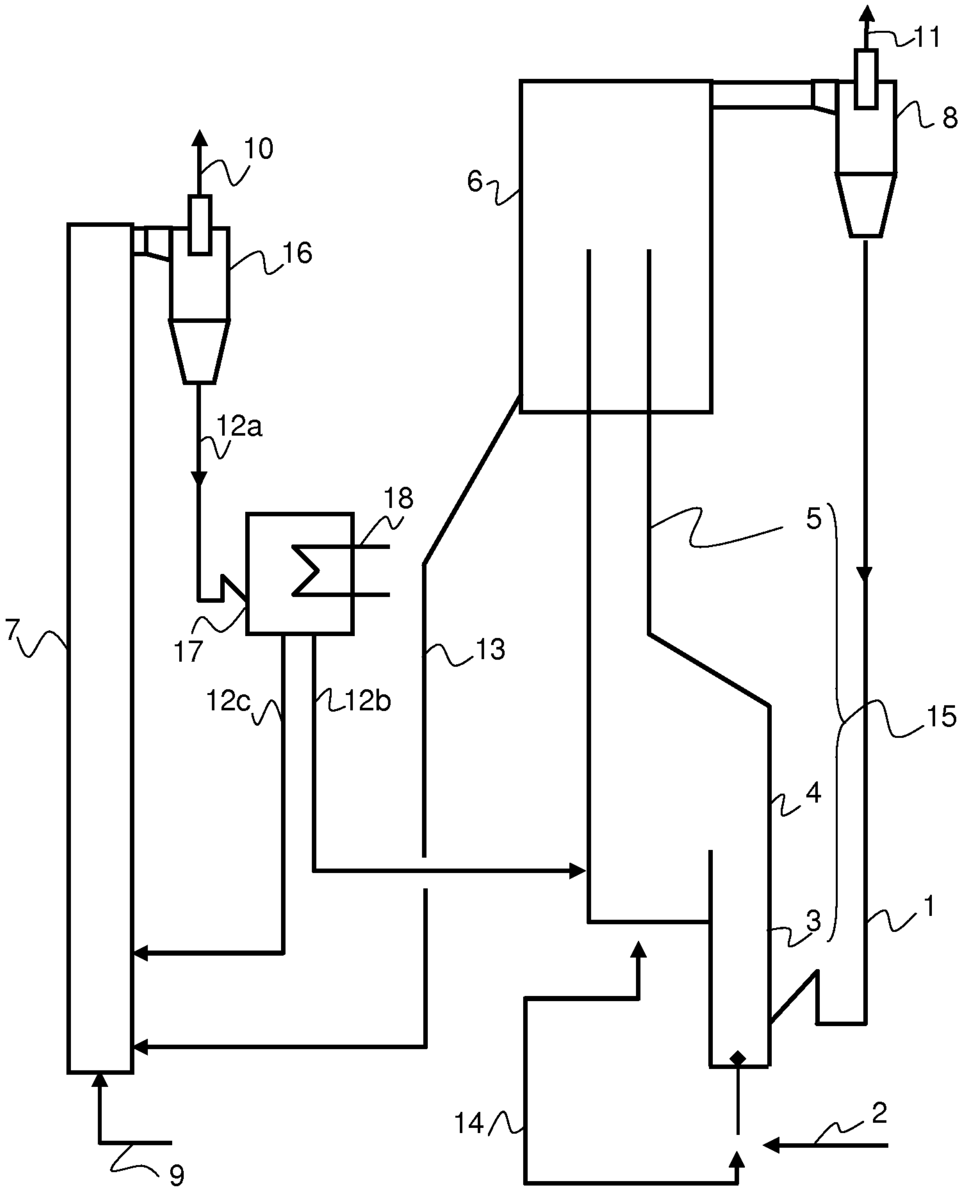


FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5447024 A
- FR 2930771
- FR 2936301
- FR 1134513 A
- FR 2960940 A1
- FR 2980258 A1
- US 20120214160 A1
- EP 2577162 A

### Littérature non-brevet citée dans la description

- **GELDART D.** *Powder Technology,* 1973, vol. 7, 285-292